# EUROPÄISCHE PATENTANMELDUNG

(11) **EP 0 870 818 A2**
(43) Veröffentlichungstag der Anmeldung: **14.10.1998**
(21) Anmeldenummer: 98102171.0
(22) Anmeldetag: 07.02.1998
(51) Int. Cl.: C10J 3/48

(54) **Synthesegaserzeuger mit Brenn- und Quenchkammer**

(30) Priorität: 08.04.1997 DE 19714376
(71) Anmelder: MAN Gutehoffnungshütte Aktiengesellschaft, 46145 Oberhausen (DE)
(72) Erfinder: Deeke, Wolfgang, Dipl.-Ing., 40822 Mettmann (DE); Gruhlke, Wolfram, Dipl.-Ing., 47918 Toenis-Vorst (DE); Heering, Jürgen, Dr.-Ing., 40668 Meerbusch (DE); Köhnen, Klaus, Dipl.-Ing., 45481 Mülheim (DE)

(57) **Zusammenfassung**

Die Erfindung betrifft einen Synthesegaserzeuger mit Brenn- und Quenchkammer zur Erzeugung, Kühlung und Reinigung von Gasen, die durch Partialoxidation in der Brennkammer des Synthesegaserzeugers hergestellt werden.

Die Brennkammer (3) und die Quenchkammer (7) sind durch einen Strömungskanal (6) verbundene separate Kammern. Im Gaseintrittsbereich der Quenchkammer (7) sind Düsenstöcke (10, 11) mit Düsenköpfen (9, 34) angeordnet, die ein Quenchmedium (8) eindüsen. Der Quenchzone innerhalb der Quenchkammer (7) schließt sich eine Nutzgas-Quenchmedium-Mischzone an. Am Quenchkammeraustritt befindet sich ein Konus (20). Diesem Konus ist ein Wasserbad (21) nachgeschaltet.

Das Nutzgas verläßt nach einer Umlenkung um 180 ° im Rückseitenbereich des Konus (20) über Gasaustrittsöffnungen (23) den Synthesegaserzeuger.

## Beschreibung

Die Erfindung betrifft einen Synthesegaserzeuger mit Brenn- und Quenchkammer zur Erzeugung, Kühlung und Reinigung von Gasen, die durch Partialoxidation in der Brennkammer des Synthesegaserzeugers erzeugt werden.

Derartige Synthesegaserzeuger in unterschiedlichen konstruktiven Ausführungen sind bekannt.

Die Partialoxidation von Brennstoffen, z. B. Kohle, Öl, Klärschlamm, Kunststoffabfall, Erdgas usw., mit dem Ziel der Erzeugung von Synthesegas und deren Nutzung bietet breitgefächerte Anwendungsmöglichkeiten.

Einige der Anwendungsmöglichkeiten sind:
- Erzeugung von Synthesegas für GuD-Anlagen,
- Erzeugung von Stadtgas,
- Versorgung von Chemieanlagen mit Synthesegasen,
- Entsorgung von Abfällen (Klärschlamm, Kunststoffe, Rückstandsdestillate) mit Herstellung eines hochwertigen Produktgases (H2 und CO),
- H2-Erzeugung für die Reduktion bei der Stahlerzeugung.

Je nach Erfordernis der Anwendungen wird dem durch partielle Oxydation erzeugten Gas ein Abhitzesystem oder eine Quencheinrichtung nachgeschaltet. In der Quencheinrichtung wird dem Gas ein Quenchmedium, z. B. Wasser, zugeführt, um es abzukühlen.

Die Aufgabe der Erfindung besteht darin, eine besonders vorteilhafte Einrichtung zu schaffen, in der Nutzgas erzeugt, gekühlt und von groben, festen und flüssigen Teilchen gereinigt wird.

Die Lösung dieser Aufgabe ist durch die Merkmale des Hauptanspruchs und der abhängigen Unteransprüche gekennzeichnet.

Nach der Erfindung werden in die Brennkammer Brennstoff und Sauerstoff über Brenner eingebracht und durch Partialoxidation ein Nutzgas erzeugt, das über einen Verbindungskanal der Quenchzone einer Quenchkammer zugeführt wird. Die Abkühlung des Nutzgases erfolgt am Eintritt der Quenchkammer durch ein gleichmäßig auf dem Umfang angeordnetes Düsensystem, über das ein Quenchmedium eingedüst wird. Je nach Erfordernis können eine oder mehrere Düsenebenen mit Düsenstöcken angeordnet werden.

Mit Hilfe des eingedüsten Quenchmediums wird die Temperatur des Nutzgases heruntergekühlt. Nach der Quenchung verläßt das Nutzgas mit hoher Geschwindigkeit über einen Konus die Quenchkammer, trifft auf ein Wasserbad und wird danach um 180° umgelenkt und den Gasaustrittsstutzen zugeleitet.

Durch die hohe Geschwindigkeit und die starke Umlenkung im Anschluß an den Konus werden größere Feststoffteilchen und Wassertröpfchen ins Wasserbad hinein abgeschieden. Somit verläßt das Gas gereinigt und tropfenfrei den Synthesegaserzeuger.

Die Quenchkammer kann ungekühlte oder gekühlte Kammerwände aufweisen. Die ungekühlten Wände sind mit keramischem Material ausgekleidet, die gekühlten Wände bestehen aus einer wassergekühlten Rohr-Steg-Rohr-Wand.

Der Synthesegaserzeuger mit Brenn- und Quenchkammer kann als eine Einheit in einem gemeinsamen Druckgefäß angeordnet sein. Eine Alternative besteht darin, die Brenn- und Quenchkammer als separate Einheiten auszuführen und mittels Verflanschung zur Gesamteinheit zu verbinden.

Die Erzeugung des Gases geschieht mittels Brenner in der Brennkammer. Die Kühlung erfolgt durch ein Quenchmedium, das über die Quenchdüsen der Düsenstöcke fein verteilt in die Quenchkammer eingebracht wird. Die Reinigung von Feststoffen und Flüssigkeitstropfen wird vorgenommen durch die hohe Beschleunigung des Gases im Austrittskonus, das Aufprallen auf das Wasserbad und die nachfolgende Umlenkung um 180° in Richtung der Gasaustrittsöffnungen.

Ausführungsbeispiele der Erfindung werden anhand von schematischen Zeichnungen näher erläutert.

Es zeigen:
- Fig. 1: einen Längsschnitt durch Synthesegaserzeuger mit integrierter Quencheinrichtung,
- Fig. 2: einen Längsschnitt durch Synthesegaserzeuger mit separater Quencheinrichtung,
- Fig. 3: einen Längsschnitt durch Quencheinrichtung mit Kühlkorb und
- Fig. 4: einen Schnitt A-B nach Fig. 3 mit Anordnung der Düsenstöcke mit Düsen.

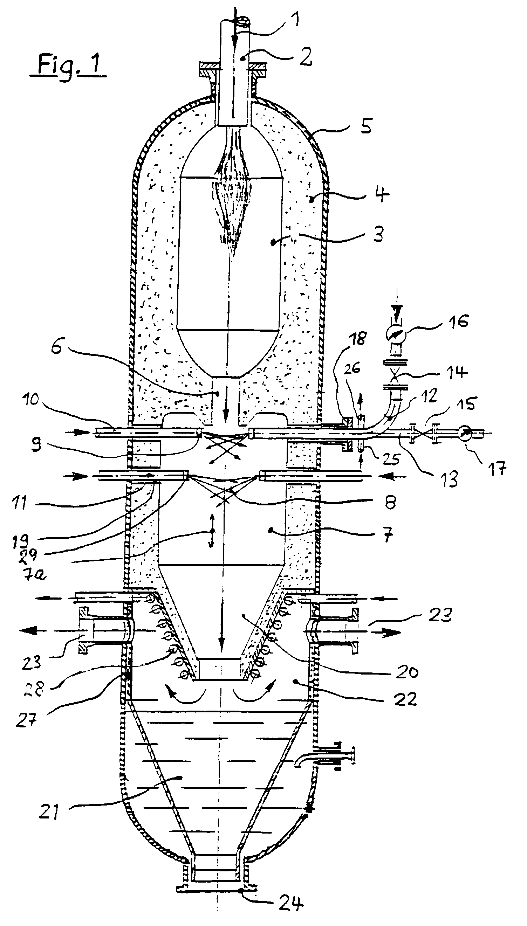

Wie in Fig. 1 dargestellt, gelangt der Brennstoff (1) über den Brenner (2) in die Brennkammer (3). Hier erfolgt die Vergasung des Brennstoffs, d. h. es wird Nutzgas erzeugt. Die Brennkammer (3) ist mit keramischem Material (4) ausgekleidet, um die Druckmantelwand (5) der Brennkammer (3) vor zu hohen Temperaturen zu schützen. Aufgrund der schlechten Wärmeleitfähigkeit der keramischen Masse kommt es zu einer nahezu adiabaten Vergasung. Diese wirkt sich günstig auf den Vergasungswirkungsgrad aus.

Das Nutzgas und die flüssige Schlacke verlassen, von oben nach unten strömend, die Brennkammer und gelangen über den Verbindungskanal (6) mit hoher Geschwindigkeit in die Quenchkammer (7). Hier erfolgt die Abkühlung durch ein Kühlmedium (8), vorzugsweise Wasser, das über die Düsenköpfe (9, 29) der Düsenstöcke (10, 11) in das Nutzgas eingebracht wird.

Die Düsenstöcke (10, 11) können je nach Erfordernis in verschiedenen Ebenen angeordnet sein. Die Düsenstöcke sind sowohl mit einem Kühlmedienanschluß (12) als auch mit einem Kaltgasanschluß (13) (für z.B. Sticksoff) ausgerüstet. Beide Anschlüsse weisen Absperrarmaturen (14, 15) und Durchflußmengenmesser (16, 17) zur Sicherstellung der gleichmäßigen Einbringung des Kühlmediums in die Quenchkammer auf. Im Falle der Verwendung von Wasser als Kühlmedium wird Stickstoff als Spül- und Inertisierungsmedium benutzt.

Die Düsenstöcke (10, 11) sind an den Druckmantelstutzen (18) angeflanscht, durchdringen die keramische Auskleidung und sind in Kühlposition im Quenchraum der Quenchkammer (7) eingebaut.

Durch die Anordnung geeigneter Durchgänge (19) in der keramischen Auskleidung besteht die Möglichkeit, Düsenstöcke (10, 11) bei Beschädigung oder aus Gründen der Inspektion von außen aus dem Quenchraum herauszuziehen.

Diese Möglichkeit der Zugänglichkeit erspart die zeitaufwendige Abkühlung des Synthesegaserzeugers und die kostenintensive Inspektion oder Reparatur von innen.

Der Konus (20) der Quenchkammer weist einen Stahlgrundkörper auf, der von einer mit Kühlmittel beaufschlagten Kühlschlange (28) umgeben ist. Dadurch wird die Formstabilität des Konus (20) gegenüber dem Heißraum gewährleistet und außerdem sichergestellt, daß die keramische Auskleidung des konischen Stahlgrundkörpers keine Beschädigung erleidet.

Die Kühlung des Konus (20) mittels Kühlschlange (28) ist entbehrlich, wenn ein (nicht dargestellter) doppelwandiger Konus mit Innenkühlung gewählt wird.

Das in der Quenchkammer (7) abgekühlte Nutzgas verläßt über den sich verengenden Konus (20) die Quenchkammer (7). Das Nutzgas führt Feststoffteilchen und Kühlmediumtropfen, z. B. Wassertröpfchen, mit sich und wird im Konus (20) stark beschleunigt und frontal auf ein Wasserbad (21) geleitet. Aufgrund der hohen Geschwindigkeit und der relativ großen Masse der Feststoff- und flüssigen Kühlmediumteilchen gelingt diesen nicht die Umlenkung um 180° zu den Gasaustrittsstutzen (23), sondern sie schlagen auf die Oberfläche des Wasserbades (21) auf, werden vom Wasserbad aufgenommen und auf diese Weise aus dem Gasstrom ausgeschieden. Das von Feststoffen gereinigte Gas wird um 180° umgelenkt und verläßt nach dem Durchlaufen eines Beruhigungsraumes (22) über die Gasaustrittsstutzen (23) den Synthesegaserzeuger.

Die in das Wasserbad hineingefallenen Feststoffteilchen, z. B. Schlacke, werden über den Feststoffaustrittsstutzen (24) abgeschieden.

Die Innenseite des Druckgefäßes (5, 31) ist im Nutzgaskontaktbereich durch eine Auskleidung (27) gegen Korrosion und Übertemperatur geschützt.

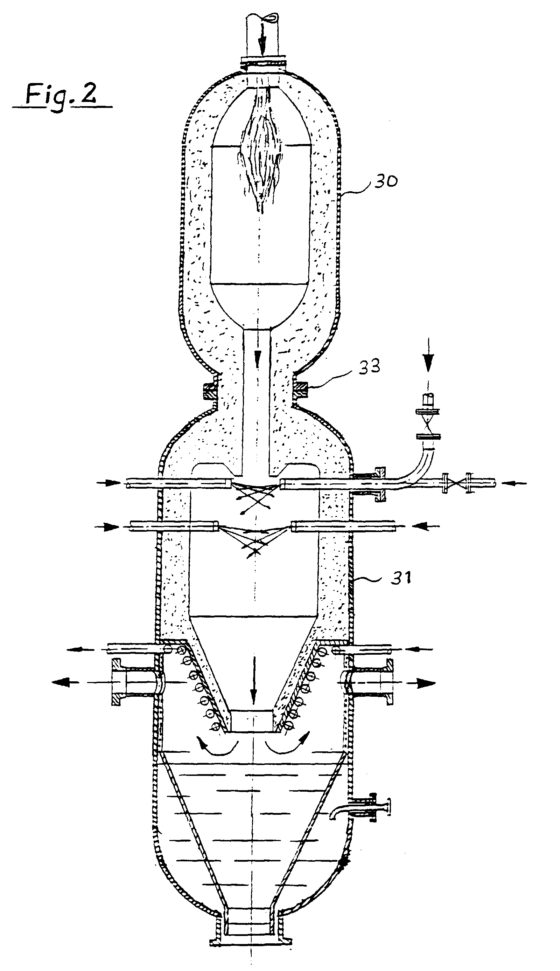

Fig. 2 zeigt den Synthesegaserzeuger mit separater Quenchkammer (7). Die Grundprinzipien und Arbeitsweise sind die gleichen wie zu Fig. 1 beschrieben. Der Unterschied liegt nur darin, daß für Brennkammer (3) und Quenchkammer (7) zwei separate Druckgefäße (30, 31) existieren, die zur Bildung einer Ausrüstungseinheit mittels Verflanschung (33) verbunden sind.

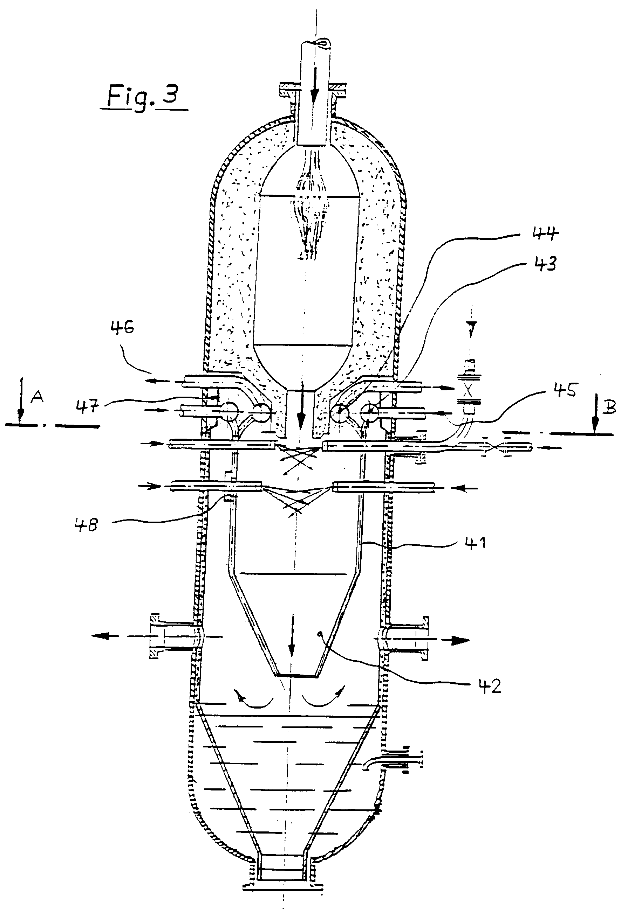

Fig. 3 stellt einen Längsschnitt durch einen Synthesegaserzeuger mit integrierter Quencheinrichtung dar. Hier ist die Quenchkammer (7) mit einem Kühlsystem versehen.

Das Kühlsystem besteht aus einem Kühlkorb (41), einer gasdichten Schweißkonstruktion aus Kühlrohren und Stegen, die mit einem Ringverteiler (43) und einem Ringsammler (44) versehen ist. An Ringverteiler (43) und Ringsammler (44) sind Wasserzuführungsleitungen (45) bzw. Wasserabführungsleitungen (46) angebracht, die durch das Druckgefäß geführt sind. In diesem Bereich sind auch die Festpunkte (47) des Kühlsystems vorgesehen, so daß der Kühlkorb (41) eine freie Ausdehnungsmöglichkeit nach unten besitzt.

Die Durchführung der Düsenstöcke (10, 11) durch den Kühlkorb (41) ist gemäß DE 195 33 908 A1 vorgegeben.

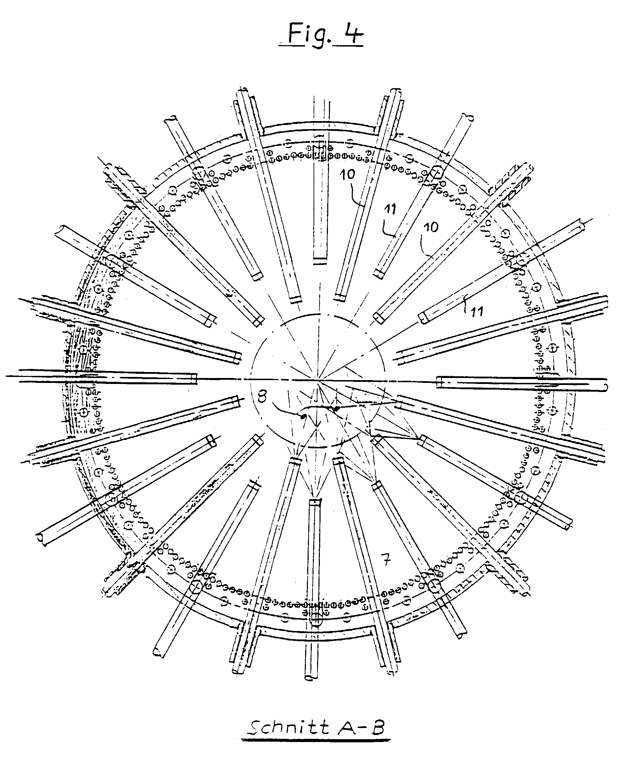

Fig. 4 (Schnitt A-B nach Fig. 3), vermittelt die Lage der Düsenstöcke (10, 11) in der Quenchkammer (7).

### Bezugsziffernliste:

- 1: Brennstoff (Brennstoff-Sauerstoffgemisch)
- 2: Brenner
- 3: Brennkammer
- 4: Keramisches Material
- 5: Druckmantelwand
- 6: Verbindungskanal
- 7: Quenchkammer
- 8: Kühlmedium
- 9: Düsenkopf
- 10: Düsenstöcke
- 11: Düsenstöcke
- 12: Kühlmediumanschluß
- 13: Stickstoffanschluß
- 14: Absperrarmatur
- 15: Absperrarmatur
- 16: Durchflußmengenmesser
- 17: Durchflußmengenmesser
- 18: Druckmantelstutzen
- 19: Durchgänge in 4
- 20: Konus
- 21: Wasserbad
- 22: Beruhigungsraum
- 23: Gasaustrittsstutzen
- 24: Feststoffaustrittsstutzen
- 25: Eintrittsstutzen (Kühlung 10, 11)
- 26: Austrittsstutzen (Kühlung 10, 11)
- 27: Auskleidung (im Nutzgaskontaktbereich)
- 28: Kühlschlange um 20
- 29: Düsenkopf
- 30: Druckgefäß (Brennkammer)
- 31: Druckgefäß (Quenchkammer)
- 33: Flansch zwischen 30 und 31
- 41: Kühlkorb
- 42: Konus von 41
- 43: Ringverteiler
- 44: Ringsammler
- 45: Wasserzuführleitung
- 46: Wasserabführleitung
- 47: Festpunkt
- 48: Abdichtung

## Patentansprüche

1. Synthesegaserzeuger mit Brenn- und Quenchkammer zur Erzeugung, Kühlung und Reinigung von Gasen, die durch Partialoxidation in der Brennkammer eines Synthesegaserzeugers erzeugt werden,
dadurch gekennzeichnet,
daß Brenn- (3) und Quenchkammer (7) separate Kammern sind, die durch einen Verbindungskanal (6) miteinander verbunden sind,
daß im Gaseintrittsbereich der Quenchkammer (7) Düsenstöcke (10, 11) mit Quenchdüsen (9) angeordnet sind, die ein Quenchmedium (8) in feiner Verteilung in das Nutzgas eindüsen,
daß sich einer Quenchzone innerhalb der Quenchkammer (7) eine Nutzgas-Quenchmedium-Mischzone (7a) anschließt,
daß am Quenchkammeraustritt ein Konus (20) angeordnet ist,
daß dem Konus ein Wasserbad (21) nachgeschaltet ist,
daß das Nutzgas nach einer 180° Umlenkung im Rückseitenbereich des Konus (20) über Gasaustrittsstutzen (23) den Synthesegaserzeuger mit Brenn- (3) und Quenchkammer (7) verläßt.

2. Synthesegaserzeuger mit Brenn- und Quenchkammer nach Anspruch 1,
dadurch gekennzeichnet,
daß die Düsenstöcke (10, 11) am Eingang der Quenchkammer (7) in verschiedenen Höhenebenen angeordnet sind, und
daß die Düsenstöcke (10, 11) in den Höhenebenen auf dem Umfang untereinander versetzt oder fluchtend angeordnet sind.

3. Synthesegaserzeuger mit Brenn- und Quenchkammer nach den Ansprüchen 1 und 2,
dadurch gekennzeichnet,
daß die Düsenstöcke (10, 11) unterschiedlich weit in die Quenchkammer (7) hineinragen.

4. Synthesegaserzeuger mit Brenn- und Quenchkammer nach den Ansprüchen 1 bis 3,
dadurch gekennzeichnet,
daß die Düsenstöcke (10, 11) mit auswechselbaren und den jeweiligen Erfordernissen angepaßten Düsenköpfen (9, 29) versehen sind.

5. Synthesegaserzeuger mit Brenn- und Quenchkammer nach den Ansprüchen 1 bis 4,
dadurch gekennzeichnet,
daß sowohl die Brennkammer (3) als auch die Quenchkammer (7) mit keramischem Material (4) ausgekleidet ist.

6. Synthesegaserzeuger mit Brenn- und Quenchkammer nach Anspruch 1,
dadurch gekennzeichnet,
daß die Brennkammer (3) mit keramischem Material (4) ausgekleidet ist und die Quenchkammer (7) als Kühlkorb (41) ausgebildet ist.

7. Synthesegaserzeuger mit Brenn- und Quenchkammer nach Anspruch 1 und weiteren Ansprüchen,
dadurch gekennzeichnet,
daß die von außen in die Quenchkammer (7) eingesteckten Düsenstöcke (10, 11) im Durchdringungsbereich (Durchgänge 19) abgedichtet sind bzw. bei der Ausführung mit Kühlkorb (41) eine Abdichtung (48) aufweisen.

8. Synthesegaserzeuger mit Brenn- und Quenchkammer nach Anspruch 1 und weiteren Ansprüchen,
dadurch gekennzeichnet,
daß Brenn- (3) und Quenchkammer (7) entweder in einem gemeinsamen Druckgefäß integriert sind (Fig. 1) oder als separate Einheiten (Fig. 2) aufgebaut sind, die durch Verflanschung (33) zu einer Gesamteinheit zusammengefügt sind.

9. Synthesegaserzeuger mit Brenn- und Quenchkammer nach Anspruch 1 und weiteren Ansprüchen,
dadurch gekennzeichnet,
daß die Düsenstöcke (10, 11) mit einer indirekten Kühlung ausgerüstet sind, die über Ein- und Austrittsstutzen (25, 26) gespeist wird.

10. Synthesegaserzeuger mit Brenn- und Quenchkammer nach Anspruch 1 und weiteren Ansprüchen,
dadurch gekennzeichnet,
daß die Innenseite des Druckgefäßes (31) im Nutzgas-Kontaktbereich, unterhalb/seitlich der Quenchkammer (7) durch eine Auskleidung (27) gegen Korrosion und Übertemperatur geschützt ist.

11. Synthesegaserzeuger mit Brenn- und Quenchkammer nach Anspruch 1 und weiteren Ansprüchen,
dadurch gekennzeichnet,
daß die Düsenstöcke (10, 11) über einen Kühlmediumanschluß (12) mit Absperrarmatur (14) und Durchflußmengenmesser (16) Wasser und über einen Kaltgasanschluß (13) mit Absperrarmatur (15) und Durchflußmengenmesser (17) mit einem Kaltgas, z.B. Stickstoff, versorgt werden.

12. Synthesegaserzeuger mit Brenn- und Quenchkammer nach Anspruch 1 und weiteren Ansprüchen,
dadurch gekennzeichnet,
daß der Konus (20) der Quenchkammer (7) einen Stahlgrundkörper aufweist, um den eine Kühlschlange (28) gewickelt ist, und
daß der Konus (20) innenseitig keramisch ausgekleidet ist.

13. Synthesegaserzeuger mit Brenn- und Quenchkammer nach den Ansprüchen 1 und 12,
dadurch gekennzeichnet,
daß der Konus (20) der Quenchkammer (7) in gekühlter Doppelwandkonstruktion ausgeführt ist, deren Innenseite keramisch ausgekleidet ist.
